# EUROPEAN PATENT APPLICATION

(11) **EP 4 668 927 A1**
(43) Date of publication of application: **24.12.2025**
(21) Application number: 23921921.5
(22) Date of filing: 16.02.2023
(51) Int. Cl.: H04W 72/04

(54) **METHOD AND APPARATUS FOR TRANSMITTING CONFIGURATION INFORMATION, AND READABLE STORAGE MEDIUM**

(71) Applicant: Beijing Xiaomi Mobile Software Co., Ltd., Beijing 100085 (CN)
(72) Inventor: LIU, Min, Beijing 100085 (CN)
(74) Representative: Stöckeler, Ferdinand
(86) International application number: PCT/CN2023/076627
(87) International publication number: WO 2024/168767

(57) **Abstract**

Provided in the present disclosure are a method and apparatus for transmitting configuration information, and a readable storage medium. The method comprises: receiving beam indication configuration information, which is sent by a network device, wherein the beam indication configuration information is used for determining whether a resource type is semi-static. In the method in the present disclosure, a network-controlled repeater receives beam indication configuration information, which is issued by a network device, so as to obtain a possible semi-static beam configuration, thereby helping the network-controlled repeater to apply a beam in combination with a semi-static beam configuration so as to execute a relay function.

## Description

### TECHNICAL FIELD

The present disclosure relates to wireless communication technology, and in particular to a method and an apparatus for transmitting configuration information, and a readable storage medium.

### BACKGROUND

A network-controlled repeater (NCR) can improve system coverage in a low-cost manner. A network device can send information to a user equipment (UE) through the NCR, or the user equipment can send information to the network device through the NCR.

### SUMMARY

The present disclosure provides a method and an apparatus for transmitting configuration information, and a readable storage medium.

In a first aspect, the disclosure provides a method for receiving configuration information, performed by a network-controlled repeater (NCR). The method includes: receiving beam indication configuration information sent by a network device, wherein the beam indication configuration information is configured to determine whether a resource type is semi-persistent.

In the method according the present disclosure, the network-controlled repeater receives the beam indication configuration information sent by the network device to obtain a possible semi-persistent beam configuration, thereby facilitating the network-controlled repeater to use a beam in combination with a semi-persistent beam configuration to perform a relay function.

In some possible implementations, receiving the beam indication configuration information sent by the network device comprises: receiving a radio resource control (RRC) signaling sent by the network device, wherein the RRC signaling comprises the beam indication configuration information.

In some possible implementations, the RRC signaling comprises a first information field, and the first information field indicates the resource type.

In some possible implementations, the first information field indicates whether a semi-persistent time feature is enabled.

In some possible implementations, the first information field indicates that the resource type comprises one of: semi-persistent, periodic, or aperiodic.

In some possible implementations, the beam indication configuration information comprises at least one of: a beam configuration identification (ID); a beam ID; a time resource; a periodicity; or a reference subcarrier spacing (SCS).

In some possible implementations, the method further comprises: receiving a first signaling sent by the network device, wherein the first signaling is configured to activate the beam indication configuration information, or the first signaling is configured to deactivate the beam indication configuration information.

In some possible implementations, the first signaling comprises at least one of: downlink control information (DCI); or a media-access-control control element (MAC CE).

In some possible implementations, the first signaling indicates at least one of: a beam configuration ID; or an activation instruction or a deactivation instruction.

In some possible implementations, the first signaling comprises at least one of: a second information field for indicating the beam configuration ID; or a third information field for indicating the activation instruction or the deactivation instruction.

In some possible implementations, in a case where the first signaling is DCI, the second information field is reuse of an original information field in the DCI.

In some possible implementations, in a case where the first signaling is DCI, the third information field is a dedicated information field added in the DCI.

In some possible implementations, in a case where the beam indication configuration information does not comprise a time resource, the first signaling further comprises a fourth information field for indicating a time resource ID.

In some possible implementations, in a case where the first signaling is DCI, the fourth information field is reuse of an original information field in the DCI.

In some possible implementations, the original information field in the DCI comprises at least one of a time resource indication field or a beam ID indication field.

In some possible implementations, the method further comprises: determining a time location where the first signaling takes effect based on a time location where the first signaling is located; and determining an application position of a semi-persistent beam corresponding to the beam indication configuration information based on the time position where the first signaling takes effect, and a time resource, a periodicity and a reference SCS in the beam indication configuration information.

In some possible implementations, the method further comprises: determining a time position where the first signaling takes effect based on a time position where feedback information corresponding to the first signaling is located; and determining an application position of a semi-persistent beam corresponding to the beam indication configuration information based on the time position where the first signaling takes effect, a time resource, a periodicity and a reference SCS in the beam indication configuration information.

In a second aspect, the present disclosure provides a method for sending configuration information, performed by a network device. The method comprises: sending beam indication configuration information to a network-controlled repeater, wherein the beam indication configuration information is configured to determine whether a resource type is semi-persistent.

In the method according the present disclosure, the network device sends the beam indication configuration information to the network-controlled repeater to issue a semi-persistent beam configuration, thereby facilitating the network-controlled repeater to use a beam in combination with the semi-persistent beam configuration to perform a relay function.

In some possible implementations, sending the beam indication configuration information to the network-controlled repeater comprises: sending a radio resource control (RRC) signaling to the network-controlled repeater, wherein the RRC signaling comprises the beam indication configuration information.

In some possible implementations, the RRC signaling comprises a first information field, and the first information field indicates one of: whether a semi-persistent time feature is enabled; or the resource type comprising one of: semi-persistent, periodic, or aperiodic.

In some possible implementations, the method further comprises: sending a first signaling to the network-controlled repeater, wherein the first signaling is configured to activate the beam indication configuration information, or the first signaling is configured to deactivate the beam indication configuration information.

In some possible implementations, the first signaling comprises at least one of: downlink control information (DCI); or a media-access-control control element (MAC CE).

In some possible implementations, the first signaling comprises at least one of: a second information field for indicating a beam configuration identification (ID); or a third information field for indicating an activation instruction or a deactivation instruction.

In some possible implementations, in a case where the first signaling is DCI, the second information field is reuse of an original information field in the DCI.

In some possible implementations, in a case where the first signaling is DCI, the third information field is a dedicated information field added in the DCI.

In some possible implementations, in a case where the beam indication configuration information does not comprise a time resource, the first signaling further comprises a fourth information field for indicating a time resource ID.

In some possible implementations, the fourth information field is reuse of an original information field in the DCI.

In some possible implementations, the method further comprises: determining whether the beam indication configuration information is activated based on feedback information sent by the network-controlled repeater based on the first signaling.

In a third aspect, the present disclosure provides a device for receiving configuration information, which can be used to perform the steps performed by the network-controlled repeater in the first aspect or any possible design of the first aspect. The network-controlled repeater can implement the functions of the above methods in the form of a hardware structure, a software module, or a hardware structure plus a software module.

When the device shown in the third aspect is implemented by a software module, the apparatus may include a transceiver module. The transceiver module can be configured to support a communication device to perform communication.

When performing the steps described in the first aspect above, the transceiver module is configured to receive beam indication configuration information sent by a network device, wherein the beam indication configuration information is configured to determine whether a resource type is semi-persistent.

In a fourth aspect, the present disclosure provides a device for sending configuration information, which can be used to perform the steps performed by a network device in the second aspect or any possible design of the second aspect. The network device can implement the functions of the above methods in the form of a hardware structure, a software module, or a hardware structure plus a software module.

When the device shown in the fourth aspect is implemented by a software module, the apparatus may include a transceiver module. The transceiver module can be configured to support a communication device to perform communication.

When performing the steps described in the second aspect above, the transceiver module is configured to send beam indication configuration information to a network-controlled repeater, wherein the beam indication configuration information is configured to determine whether a resource type is semi-persistent.

In a fifth aspect, the present disclosure provides a network-controlled repeater, comprising a processor and a memory; the memory is configured to store a computer program; the processor is used to execute the computer program to implement the first aspect or any possible design of the first aspect.

In a sixth aspect, the present disclosure provides a network device, comprising a processor and a memory; the memory is used to store a computer program; the processor is used to execute the computer program to implement the second aspect or any possible design of the second aspect.

In a seventh aspect, the present disclosure provides a computer-readable storage medium, having instructions, a computer program, or a program stored thereon that, when called and executed by a computer, enable the computer to implement the above-mentioned first aspect or any possible design of the first aspect.

In an eighth aspect, the present disclosure provides a computer-readable storage medium, having instructions, a computer program, or a program stored thereon that, when called and executed by a computer, enable the computer to implement the above-mentioned second aspect or any possible design of the second aspect.

It should be understood that the foregoing general description and the following detailed description are illustrative and explanatory only and are not restrictive of the present disclosure.

### BRIEF DESCRIPTION OF THE DRAWINGS

The drawings described herein are used to provide a further understanding of the embodiments of the present disclosure and constitute a part of the present disclosure. The illustrative embodiments of the present disclosure and their descriptions are used to explain the embodiments of the present disclosure and do not constitute an improper limitation on the embodiments of the present disclosure.

The accompanying drawings herein are incorporated in and constitute a part of the specification, illustrate embodiments consistent with the embodiments of the present disclosure, and together with the description, serve to explain the principles of the embodiments of the present disclosure.
FIG. 1 is a schematic diagram of a wireless communication system provided by an embodiment of the present disclosure.
FIG. 2 is a flow chart illustrating a method for transmitting configuration information according to an embodiment of the present disclosure.
FIG. 3 is a flow chart illustrating a method for receiving configuration information according to an embodiment of the present disclosure.
FIG. 4 is a flow chart illustrating a method for receiving configuration information according to an embodiment of the present disclosure.
FIG. 5 is a flow chart illustrating a method for receiving configuration information according to an embodiment of the present disclosure.
FIG. 6 is a flow chart illustrating a method for sending configuration information according to an embodiment of the present disclosure.
FIG. 7 is a flow chart illustrating a method for sending configuration information according to an embodiment of the present disclosure.
FIG. 8 is a block diagram illustrating a device for receiving configuration information according to an embodiment of the present disclosure.
FIG. 9 is a block diagram illustrating a network-controlled repeater according to an embodiment of the present disclosure.
FIG. 10 is a block diagram illustrating a device for sending configuration information according to an embodiment of the present disclosure.
FIG. 11 is a block diagram illustrating a network device according to an embodiment of the present disclosure.

### DETAILED DESCRIPTION

Embodiments of the present disclosure are further described in conjunction with the accompanying drawings and detailed implementations.

Embodiments will be described in detail herein, examples of which are shown in the accompanying drawings. When the following description refers to the drawings, unless otherwise indicated, the same numbers in different drawings represent the same or similar elements. The implementations described in the following embodiments do not represent all implementations consistent with the embodiments of the present disclosure. Instead, they are merely examples of devices and methods consistent with some aspects of the present disclosure as detailed in the appended claims.

The terms used in the embodiments of the present disclosure are only for the purpose of describing specific embodiments and are not intended to limit the embodiments of the present disclosure. The singular forms of "a" and "the" used in the embodiments of the present disclosure and the appended claims are also intended to include plural forms, unless the context clearly indicates other meanings. It should also be understood that the term "and/or" used herein refers to and includes any or all possible combinations of one or more associated listed items.

It should be understood that although the terms first, second, third, etc. may be configured to describe various information in the embodiments of the disclosure, the information should not be limited to these terms. These terms are only configured to distinguish the same type of information from each other. For example, without departing from the scope of the embodiments of the disclosure, the first information may also be referred to as the second information, and similarly, the second information may also be referred to as the first information. Depending on the context, the word "if" as used herein may be interpreted as "at the time of" or "when" or "in response to determining".

Embodiments of the present disclosure are described in detail below, examples of which are shown in the accompanying drawings, in which the same or similar reference numerals throughout represent the same or similar elements. The embodiments described below with reference to the accompanying drawings are illustrative and are intended to be used to explain the present disclosure, and should not be construed as limiting the present disclosure.

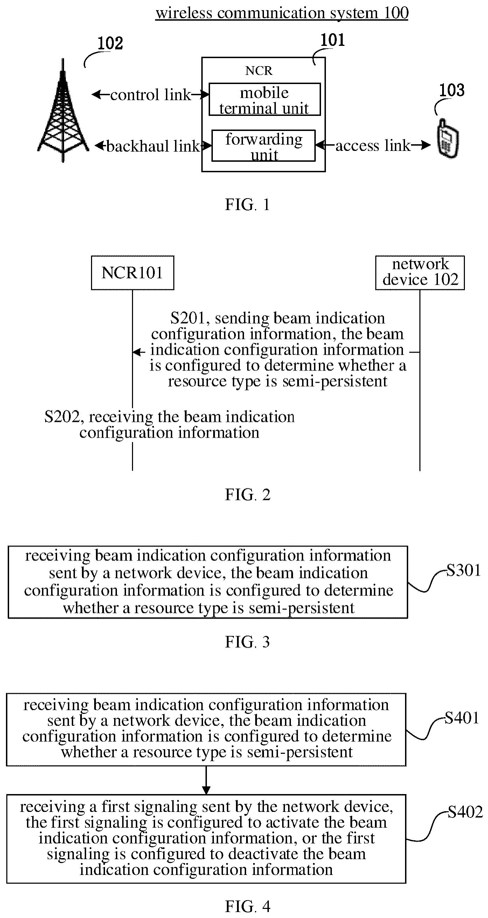

As shown in FIG. 1, a method for transmitting configuration information provided by an embodiment of the present disclosure may be applied to a wireless communication system 100, which may include: a network-controlled repeater NCR 101, a network device 102, and a user device (UE) 103.

With reference to FIG. 1, the NCR 101 includes: a mobile terminal unit (network-controlled repeater mobile termination, NCR-MT) and a forwarding (network-controlled repeater forwarding, NCR-Fwd) unit.

The mobile terminal unit communicates with the network device 102 via a control link. For example, the mobile terminal unit may receive a control command sent by the network device 102 via the control link. The control command is configured to control a behavior of the forwarding unit, that is, to control a behavior on a backhaul link and an access link, such as a beam indication direction, turning on and off forwarding, etc.

The backhaul link can be configured for the forwarding unit to communicate with the network device 102, and the access link can be configured for the forwarding unit to communicate with the UE 103, so that the UE 103 can communicate with the network device 102 through the NCR 101. It is understandable that the NCR 101 can also communicate with multiple UEs 103.

It should be understood that the above wireless communication system 100 can be used for both low-frequency scenarios and high-frequency scenarios. Application scenarios of the wireless communication system 100 include, but are not limited to, a long term evolution (LTE) system, an LTE frequency division duplex (FDD) system, an LTE time division duplex (TDD) system, a worldwide interoperability for micro wave access (WiMAX) communication system, a cloud radio access network (CRAN) system, a future fifth-generation (5G) system, a new radio (NR) communication system, or a future evolved public land mobile network (PLMN) system, etc.

The network-controlled repeater NCR101 shown above may adopt a user device, that is, if the user device has or enables the function of the network-controlled repeater NCR, then the user device may be regarded as the network-controlled repeater NCR.

The network device 102 may be an access network device (or access network point). Among them, the access network device refers to a device that provides network access functions, such as a radio access network (RAN) base station, etc. The network device 102 may specifically include a base station (BS), or a base station and a wireless resource management device for controlling the base station, etc. The network device 102 may also include a relay station (repeater), an access point, a base station in a future 5G network, a base station in a future evolved PLMN network, or an NR base station, etc. The network device 102 may be a wearable device or a vehicle-mounted device. The network device 102 may also be a communication chip with a communication module.

For example, the network device 102 includes but is not limited to: a next-generation base station (gnodeB, gNB) in 5G, an evolved node B (eNB) in an LTE system, a radio network controller (RNC), a node B (NB) in a Wideband Code Division Multiple Access (WCDMA) system, a wireless controller under a CRAN system, a base station controller (BSC), a base transceiver station (BTS) in a Global System for Mobile Communications (GSM) system or a Code Division Multiple Access (CDMA) system, a home base station (for example, home evolved nodeB, or home node B, HNB), a baseband unit (BBU), a transmitting and receiving point (TRP), a transmitting point (TP) or a mobile switching center, etc.

The UE 103 may be a terminal, an access terminal, a terminal unit, a terminal station, a mobile station (MS), a remote station, a remote terminal, a mobile terminal, a wireless communication device, a terminal agent or a terminal device, etc. The UE 103 may have a wireless transceiver function, and it may communicate (such as wirelessly communicate) with one or more network devices of one or more communication systems and receive network services provided by the network devices. The network devices herein include but are not limited to the illustrated network device 102.

In the relevant protocol, based on the architecture shown in FIG.1, the NCR 101 can receive a radio resource control (RRC) signaling from the network device 102, and the RRC signaling can be configured to configure time resource information in a periodic beam indication or an aperiodic beam indication, and a downlink control information (DCI) signaling can be used to trigger the aperiodic beam indication. The relevant content of semi-persistent beam indication is missing. For example, a problem of how to configure or activate the semi-persistent beam indication needs to be solved.

Embodiments of the present disclosure provide a method for transmitting configuration information. Referring to FIG. 2, FIG. 2 is a method for transmitting configuration information according to an embodiment of the disclosure. As shown in FIG. 2, the method includes steps S201 to S202.

Step S201, a network device 102 sends beam indication configuration information to a network-controlled repeater NCR101, the beam indication configuration information is configured to determine whether a resource type is semi-persistent.

In some possible implementations, referring to FIG. 1, the network device 102 may send the beam indication configuration information (Semi-persistent Beam Indication Configuration) to the NCR 101 via a control link.

In an example, the network device 102 sends the RRC signaling to the NCR 101 through the control link, and the RRC signaling includes the beam indication configuration information.

In some possible implementations, the resource type includes at least one of: periodic, aperiodic, or semi-persistent. The naming of the resource type here is only for illustration and not limitation, and may also be replaced by a time resource type, a time feature type, or a resource configuration type.

In some possible implementations, there are multiple ways for the beam indication configuration information to determine whether the resource type is semi-persistent. For example, the beam indication configuration information directly indicates a resource type corresponding to a current configuration, such as semi-persistent. For another example, the beam indication configuration information indicates whether the resource type corresponding to the current configuration is semi-persistent or not semi-persistent. The way in which the beam indication configuration information is used to determine the resource type can also refer to the description of the following embodiments.

Step S202, the NCR 101 receives the beam indication configuration information.

In some possible implementations, after receiving the beam indication configuration information, the NCR101 can determine whether the resource type is semi-persistent according to the beam indication configuration information.

In some possible implementations, for the semi-persistent beam indication configuration information, it may be activated or deactivated by the network device 102 through signaling.

In embodiments of the disclosure, the NCR 101 receives the beam indication configuration information sent by the network device 102 to obtain a possible semi-persistent beam configuration, so that the NCR 101 applies beams in combination with the semi-persistent beam configuration to perform a relay function.

Embodiments of the present disclosure provide a method for receiving configuration information, which is performed by a network-controlled repeater NCR101. Referring to FIG. 3, FIG. 3 is a method for receiving configuration information according to an embodiment of the disclosure. As shown in FIG. 3, the method includes step S301.

Step S301, the NCR101 receives beam indication configuration information sent by a network device 102, the beam indication configuration information is configured to determine whether a resource type is semi-persistent.

In some possible implementations, the NCR 101 may receive the beam indication configuration information sent by the network device 102 through a control link.

In some possible implementations, step S301 of the method may include the following step S301'.

Step S301', the NCR101 receives an RRC signaling sent by the network device 102, and the RRC signaling includes the beam indication configuration information.

In an example, the NCR 101 receives the RRC signaling through the control link.

In some possible implementations, the RRC signaling includes a first information field, and the first information field is used to indicate the resource type.

In an example, compared to an RRC signaling used to configure a periodic beam indication, the first information field is a newly added information field.

The first information field may directly indicate the resource type or implicitly indicate the resource type.

In an example, the first information field is configured to indicate whether a semi-persistent time feature is enabled.

In this example, the RRC signaling includes the semi-persistent time feature, and when the first information field indicates enable, it indicates that the beam indication configuration information is semi-persistent.

Alternatively, when the first information field indicates that it is not enabled or disabled, it indicates that the beam indication configuration information is not semi-persistent. For example, when the first information field indicates that it is not enabled or disabled, it indicates that the beam indication configuration information is periodic.

For example, when a bit value corresponding to the first information field is a first value, it indicates that the semi-persistent time feature is enabled; when the bit value corresponding to the first information field is a second value, it indicates that the semi-persistent time feature is disabled. For example, the first information field includes 1 bit. When a value of the 1 bit is 0, it indicates that the semi-persistent time feature is enabled; when the value of the 1 bit is 1, it indicates that the semi-persistent time feature is disabled.

In some examples, when the first information field is default, that is, when the first information field does not appear in the RRC signaling, the beam configuration is periodic by default.

In an example, the first information field is used to indicate that the resource type is one of the following: semi-persistent, periodic, or aperiodic.

In this example, different bit values corresponding to the first information field may indicate corresponding resource types, respectively.

For example, when the bit value corresponding to the first information field is the first value, the resource type is semi-persistent; when the bit value corresponding to the first information field is the second value, the resource type is periodic; when the bit value corresponding to the first information field is a third value, the resource type is aperiodic.

For example, the first information field includes 1 bit. In this case, the first information field indicates whether the resource type is semi-persistent or periodic, or whether the resource type is semi-persistent or aperiodic. For example, when the value of the 1 bit is 0, it indicates that the resource type is semi-persistent; when the value of the 1 bit is 1, it indicates that the resource type is periodic.

For example, the first information field includes 2 bits. When a value of the 2 bits is 01 or 10, it indicates that the resource type is semi-persistent; when the value of the 2 bits is 00, it indicates that the resource type is periodic; when the value of the 2 bits is 11, it indicates that the resource type is aperiodic.

In some possible implementations, the beam indication configuration information may include one or more sets of beam configurations, each set of beam configurations including corresponding parameters.

In some possible implementations, the beam indication configuration information includes at least one of the following: a beam configuration identification (ID); a beam ID; a time resource; a periodicity; or a reference subcarrier spacing (Reference SCS).

It can be understood that the reference SCS is used to indicate a configuration (such as a time resource) applicable under the reference SCS. In actual use, if an actual SCS is not the reference SCS, it can be converted based on a relationship between the actual SCS and the reference SCS.

In an example, each beam configuration ID is used to identify a set of beam configurations. For example, beam configuration ID1 represents a set of beam configurations. Each beam configuration may include a corresponding beam ID, time resource ID, periodicity, reference SCS, and resource type.

Taking the beam configuration ID1 in the beam indication configuration information as an example, the beam configuration ID1 may include the following information: at least one beam ID, a time resource corresponding to each beam ID, a periodicity corresponding to the beam configuration ID1, a reference SCS corresponding to the beam configuration ID1, and a resource type of the beam configuration ID1 (such as semi-persistent). The periodicity or reference SCS corresponding to the beam configuration ID1 indicates that the periodicity or reference SCS is applicable to all beam IDs under the beam configuration ID1. That is, the periodicity corresponding to the at least one beam ID is the same, or the reference SCS corresponding to at least one beam ID is the same.

Alternatively, the beam configuration ID1 includes: at least one beam ID, a time resource corresponding to each beam ID, a periodicity corresponding to each beam ID, a reference SCS corresponding to each beam ID, etc.

That is to say, under a set of beam configurations, the periodicities corresponding to the beam IDs may be the same or different.

The example here can also be found in the description of the detailed examples below, which are not repeated here.

In an example, each forwarding resource may include two configurations {beam ID, time resource ID}. For different forwarding resources, other parameters such as periodicity or reference SCS may be the same, and resource types may all be semi-persistent.

In an example, each time resource may include one of the following: {slot offset, symbol offset, number of continuous symbols (or symbol duration)}.

In an example, a time resource list may be configured in the RRC signaling, and the time resource ID corresponds to the time resources in the time resource list.

**In** embodiments of the disclosure, the NCR 101 receives the beam indication configuration information sent by network device 102 to obtain a possible semi-persistent beam configuration, thereby facilitating the NCR 101 to apply a beam in combination with the semi-persistent beam configuration to perform a relay function.

Embodiments of the present disclosure provide a method for receiving configuration information, which is performed by a network-controlled repeater NCR101. Referring to FIG. 4, FIG. 4 is a method for receiving configuration information according to an embodiment. As shown in FIG. 4, the method includes steps S401 to S402.

Step S401, the NCR101 receives beam indication configuration information sent by a network device 102, the beam indication configuration information is configured to determine whether a resource type is semi-persistent.

For the implementation of step S401 reference may be made to the implementation of step S301 in the above embodiments, and details will not be described here again.

In step S402, the NCR101 receives a first signaling sent by the network device 102, in which the first signaling is configured to activate the beam indication configuration information, or the first signaling is configured to deactivate the beam indication configuration information. It can also be understood here that the first signaling is used to activate or deactivate a semi-persistent beam configuration ID. It can be understood that when the first signaling is an activation signaling, the first signaling can carry a semi-persistent beam configuration ID, indicating to activate one or more semi-persistent beams corresponding to the semi-persistent beam configuration ID, in which each semi-persistent beam is identified by a beam ID. When the first signaling is a deactivation signaling, the first signaling can carry a semi-persistent beam configuration ID, indicating to deactivate one or more semi-persistent beams corresponding to the semi-persistent configuration beam ID, in which each semi-persistent beam is identified by a beam ID.

In some possible implementations, the NCR 101 may receive the first signaling through a control link.

In some possible implementations, when the first signaling is an activation signaling, the network device 102 may send a first signaling as a deactivation signaling after a period of time.

In some possible implementations, the first signaling includes at least one of the following: Downlink Control Information (DCI); or a Media-Access-Control Control Element (MAC CE).

**In** an example, the NCR 101 receives the DCI sent by the network device 102, and the DCI is used to dynamically activate or deactivate the beam indication configuration information.

In another example, the NCR 101 receives a MAC CE sent by the network device 102, and the MAC CE is used to activate or deactivate the beam indication configuration information.

In other examples, the network device 102 may send the activation signaling and the deactivation signaling through different signaling. For example, the NCR101 receives the DCI sent by the network device 102, and the DCI is used to activate the beam indication configuration information. After a period of time, the NCR101 receives the MAC CE sent by the network device 102, and the MAC CE is used to deactivate the beam indication configuration information.

In some possible implementations, the beam indication configuration information may include one or more sets of beam configurations. When multiple sets of beam configurations are included, the first signaling may be used to activate or deactivate at least one of the beam configurations.

In some possible implementations, the first signaling indicates at least one of the following: a beam configuration ID; or an activation instruction or a deactivation instruction.

In an example, the first signaling may be a DCI or a MAC CE. The beam configuration ID indicated in the first signaling corresponds to a beam configuration to be activated or deactivated. For example, when the first signaling corresponds to an activation instruction, the first signaling is used to activate the beam configuration corresponding to the beam configuration ID.

In some possible implementations, the first signaling includes at least one of the following: a second information field for indicating the beam configuration ID; or a third information field for indicating the activation instruction or the deactivation instruction.

In an example, when the beam indication configuration information includes a time resource, the first signaling may only indicate the beam configuration ID, and the activation instruction or the deactivation instruction. That is, the beam indication configuration information includes the second information field and/or the third information field.

For example, when the first signaling is DCI, the beam configuration ID is only indicated through the second information field in the DCI, and the activation instruction or deactivation instruction is indicated through the third information field.

For another example, when the first signaling is MAC CE, the MAC CE only indicates the beam configuration ID through the second information field, and indicates the activation instruction or deactivation instruction through the third information field.

In some possible implementations, the second information field may be an original information field in the first signaling, or an information field newly added in the first signaling.

In an example, when the first signaling is DCI, the second information field is one of the following: a dedicated information field added in DCI; or reuse of an original information field in DCI.

For example, a second information field is added to the DCI, and the added second information field is used to indicate the beam configuration ID.

For another example, the original information field in the DCI is reused as the second information field.

In an example, the original information field in the DCI includes at least one of a time resource indication field or a beam ID indication field.

In this example, in combination with the DCI for triggering aperiodic beam indication in the relevant protocol, the original time resource indication field in the DCI may include Tₘₐₓ fields, and the beam ID indication field may include Lₘₐₓ fields, where Tₘₐₓ =1, or Tₘₐₓ = Lₘₐₓ.

Here, a detailed example is described.

If the beam indication configuration information includes the time resource, the DCI indicates the beam configuration ID through a newly added second information field, or indicates the beam configuration ID by reusing at least one field in the Lₘₐₓ beam ID indication fields. A mapping relationship between bit values of some or all Lₘₐₓ beam ID indication fields and semi-persistent beam configuration IDs can be pre-configured, so that different semi-persistent beam configuration IDs can correspond to different bit values of the beam ID indication fields.

In some possible implementations, the third information field may be an original information field in the first signaling, or an information field newly added in the first signaling.

In an example, when the first signaling is DCI, the third information field is one of the following: a dedicated information field added in the DCI; or reuse of an original information field in DCI.

In this example, the second information field and the third information field may both be newly added information fields; or both reuse an original DCI information field; or one of the second information field and the third information field is a newly added information field, and the other one reuses an original DCI information field.

In an example, the original information field in the DCI includes at least one of a time resource indication field or a beam ID indication field.

Here, a detailed example is described.

If the beam indication configuration information includes a time resource, the DCI indicates the beam configuration ID through the newly added second information field, indicate activation or deactivation by reusing some or all of the Tₘₐₓ time resource indication fields, or indicate activation or deactivation by reusing some or all of the Lₘₐₓ beam ID indication fields. For example, when all of the Tₘₐₓ time resource indication fields and/or the Lₘₐₓ beam ID indication fields are the first bit value, it indicates an activation instruction. When all of the Tₘₐₓ time resource indication fields and/or the Lₘₐₓ beam ID indication fields are the second bit value, it indicates a deactivation instruction.

In some possible implementations, when the beam indication configuration information does not include a time resource, the first signaling further includes a fourth information field for indicating a time resource ID.

In this implementation, when the beam indication configuration information does not include a time resource, the first signaling mat indicate not only the beam configuration ID, the activation instruction or the deactivation instruction, but also the time resource ID. It can be understood that the time resource list can be pre-configured by the network device 102 through an RRC signaling. The time resource ID indicated in the first signaling is a time resource ID corresponding to a semi-persistent beam activated or deactivated this time.

For example, the first signaling is the MAC CE. When the beam indication configuration information does not include a time resource, the MAC CE may indicate the beam configuration ID, the activation instruction or the deactivation instruction, and the time resource ID.

In some possible implementations, when the first signaling is the DCI, the fourth information field includes one of the following: a dedicated information field added in the DCI; or reuse of an original information field in DCI.

The original information field in the DCI includes at least one of a time resource indication field or a beam ID indication field.

In an example, the fourth information field is an information field newly added in the DCI for indicating the time resource.

In another example, the fourth information field indicates the time resource ID by reusing a time resource indication field (part of or all the Tₘₐₓ fields) in the DCI. In addition, for the second information field, it can reuse the beam ID indication field (part of or all the Lₘₐₓ fields) in the DCI to indicate the beam configuration ID.

For the third information field, i.e., an activation/deactivation field, a new field can be added to indicate whether the DCI is used for semi-persistent indication or dynamic indication, and the newly added field is also used to indicate whether the semi-persistent indication is for activation or deactivation. Moreover, when bit information of the newly added field is "00", it indicates that the DCI is not used for activation or deactivation of a semi-persistent beam. When the bit information of the newly added field is "01", it indicates that the DCI is used for activation, the beam ID indication field in the DCI is reused to indicate an activated semi-persistent beam configuration ID, and the time resource indication field in the DCI is reused to indicate a time resource ID of the semi-persistent beam. When the bit information of the newly added field is "10", it indicates that the DCI is used for deactivation, and the beam ID indication field in the DCI is reused to indicate a deactivated semi-persistent beam configuration ID.

In other examples, the second information field, the third information field, and the fourth information field may all be newly added information fields in the DCI, or may all be reuse of the original information fields in the DCI, or may partially be newly added information fields and the rest may be reuse of the original information fields in the DCI.

In the embodiments of the disclosure, the beam indication configuration information can be activated or deactivated according to the first signaling of the network device 102. In the activation scenario, the NCR 101 can apply the corresponding semi-persistent beam, and the NCR 101 may stop applying the semi-persistent beam in the deactivation scenario. In addition, the NCR 101 can obtain parameters related to the beam indication in different scenarios according to the beam indication configuration information of the network device 102 and the different indications of the first signaling.

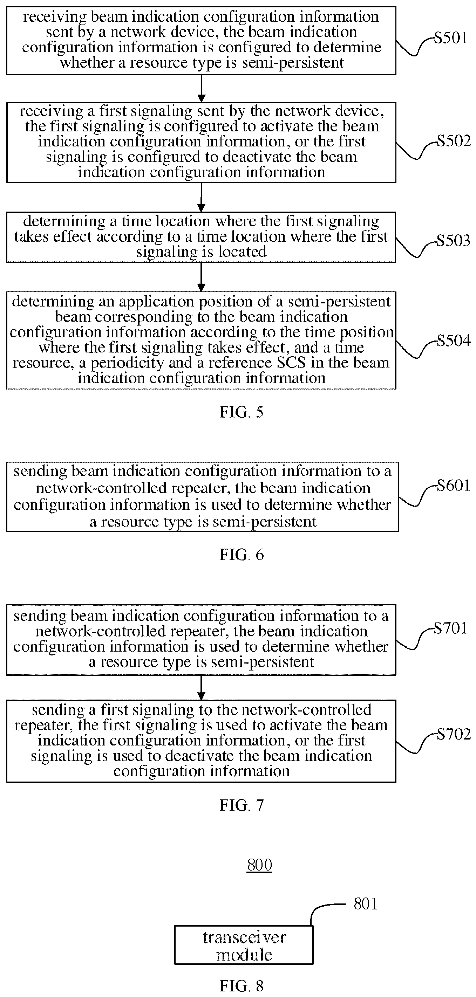

Embodiments of the present disclosure provide a method for receiving configuration information, which is performed by a network-controlled repeater NCR101. Referring to FIG. 5, FIG. 5 is a method for receiving configuration information according to an embodiment. As shown in FIG. 5, the method includes steps S501 to S504.

Step S501, the NCR101 receives beam indication configuration information sent by a network device 102, in which the beam indication configuration information is used to determine whether a resource type is semi-persistent.

For the implementation of step S501 reference may be made to the implementation of step S301 in the aforementioned embodiment, and details will not be described here again.

Step S502, the NCR101 receives a first signaling sent by the network device 102, in which the first signaling is used to activate the beam indication configuration information, or the first signaling is used to deactivate the beam indication configuration information.

For the implementation of step S502 reference may be made to the implementation of step S402 in the aforementioned embodiment, and details will not be described here again.

Step S503, the NCR101 determines a time location where the first signaling takes effect according to a time location where the first signaling is located.

Step S504, the NCR 101 determines an application position of a semi-persistent beam corresponding to the beam indication configuration information according to the time position at which the first signaling takes effect, and a time resource, a periodicity and a reference SCS in the beam indication configuration information.

It is understandable that the application location of the semi-persistent beam may refer to, for example, a time location where the NCR101 uses the semi-persistent beam to send and receive information, for example, a time location when the NCR101 uses the semi-persistent beam to forward information sent by network device 102 to the UE 103.

In some possible implementations, the time location where the first signaling is located if a time location at which the NCR 101 receives the first signaling. The first signaling may be a DCI or a MAC CE signaling.

In an example, the time position where the first signaling is located may be a slot or a symbol where the first signaling is located.

In some possible implementations, the time resource may also be indicated in the first signaling. The time resource may include one of the following: {slot offset, symbol offset, number of continuous symbols (or symbol duration) }.

In some possible implementations, the time position where the first signaling takes effect may be a starting time position for the first signaling to begins to take effect, or an ending time position for the first signaling to stop taking effect, which depends on whether the first signaling is an activation instruction or a deactivation instruction.

In some possible implementations, the time position at which the first signaling takes effect may be: the time position at which the first signaling is located + a defined offset value. The defined offset value may be 0 or other values, such as a value determined according to a beam starting time point. The defined offset value may be defined by a protocol or configured by the network device 102.

The method of determining the application location may refer to the description of the following examples.

Embodiments of the disclosure are applicable to a scenario where the NCR101 does not need to perform hybrid automatic repeat request (HARQ) feedback for the first signaling. The NCR101 determines the time position of receiving the first signaling as a reference effective position, and determines an effective position of the first signaling as: the reference effective position + a defined offset value. According to the slot offset value (slot offset) or symbol offset value (symbol offset) in the time resource and the reference SCS, the application position of the semi-persistent beam corresponding to the beam configuration is determined. It is worth noting that the application position of the semi-persistent beam is not allowed to be earlier than the effective time/effective position of the first signaling. The following lists some examples to describe the method of determining the application position, in which the application position includes a starting application position and an ending application position.

In a first example, the NCR101 receives the first signaling indicating activation in slot n. For example, the defined offset value=0, the slot offset value (slot offset) in the time resource=slo, the symbol offset value=syo, the symbol duration=syd, and the periodicity is set to p.

The starting application position includes a starting application slot and a starting application symbol. In this example, the starting application slot x of the semi-persistent beam is: slot x = slot n + slo, the starting application symbol is the (syo+1)^{th} symbol in slot x, if syo = 0, the starting application symbol is the first symbol in slot x, or symbol#0.

In a second example, the NCR101 receives the first signaling indicating deactivation in slot m, the defined offset value=0, the slot offset value in the time resource=slo, the symbol offset value=syo, the symbol duration=syd, and the periodicity is set to be p.

The termination application position includes a termination application slot. In this example, the application slot of the semi-persistent beam is slot y = slot n + slo + n*N, where n is a natural number 0, 1, 2, ..., then the termination application slot of the semi-persistent beam is the last application slot before slot m.

Embodiments of the present disclosure provide a method for receiving configuration information, which is performed by a network-controlled repeater NCR101. The method includes steps S501-S502 and S503'S504'.

Step S501, the NCR101 receives beam indication configuration information sent by a network device 102, the beam indication configuration information is used to determine whether the resource type is semi-persistent.

For the implementation of step S501 reference may be made to the implementation of step S301 in the aforementioned embodiment, and details will not be described here again.

Step S502, the NCR101 receives a first signaling sent by the network device 102, the first signaling is used to activate the beam indication configuration information, or the first signaling is used to deactivate the beam indication configuration information.

For the implementation of step S502 reference may be made to the implementation of step S402 in the aforementioned embodiment, and details will not be described here again.

Step S503', the NCR101 determines a time position where the first signaling takes effect according to a time position where feedback information corresponding to the first signaling is located.

Step S504', the NCR101 determines an application position of a semi-persistent beam corresponding to the beam indication configuration information according to the time position at which the first signaling takes effect, a time resource, a periodicity, and a reference SCS in the beam indication configuration information. In some possible implementations, the time resource may also be indicated in the first signaling. The time resource may include one of the following: {slot offset, symbol offset, symbol duration}.

In some possible implementations, the feedback information may be HARQ-ACK feedback information.

In some possible implementations, the time position where the first signaling takes effect may be: a time position where the NCR101 feeds back the HARQ-ACK + a defined offset value. The defined offset value may be 0 or other values, such as a value determined according to a beam start time point. The defined offset value may be defined by a protocol or configured by the network device 102.

The method of determining the application location may refer to the description of the following examples.

It can be understood that the time position involved in embodiments of the present disclosure can be either a slot unit or a symbol unit.

Embodiments of the disclosure are applicable to a scenario where the NCR101 needs to perform HARQ-ACK feedback for the first signaling. The NCR101 determines that a position where the first signaling takes effect is the reference effective position + the defined offset value based on the time position where the feedback HARQ-ACK is located, where the defined offset value can be 0 or other predefined values, such as a value determined according to the time point when the beam is started. According to the slot offset value or symbol offset value in the time resource and the reference SCS, the application position of the semi-persistent beam corresponding to the beam configuration is determined.

In an example, the application location includes a termination application location such as a termination application slot.

In this example, for example, if the NCR101 sends the HARQ-ACK feedback information in slot m for the first signaling indicating deactivation, the semi-persistent beam corresponding to the beam indication configuration information becomes invalid in slot m+X, where X is a defined offset value and X can be equal to 0, where X is a slot value or symbol value predefined by the network or protocol. The termination application slot of the semi-persistent beam is the last application slot before the deactivation signaling takes effect.

In some possible implementations, when the first signaling is an activation signaling, the NCR101 does not need to perform the HARQ-ACK feedback, and when the first signaling is a deactivation signaling, the NCR101 needs to perform the HARQ-ACK feedback.

Embodiments of the present disclosure provide a method for sending configuration information in an embodiment, and the method is performed by a network device 102. Referring to FIG. 6, FIG. 6 is a method for sending configuration information according to an embodiment. As shown in FIG. 6, the method includes step S601, specifically:

Step S601, the network device 102 sends beam indication configuration information to a network-controlled repeater 101, the beam indication configuration information is used to determine whether a resource type is semi-persistent.

In some possible implementations, the network device 102 may send the beam indication configuration information to the NCR 101 via a control link.

In some possible implementations, step S601 of the method may include the following step S601'.

Step S601', the network device 102 sends an RRC signaling to the network-controlled repeater 101, and the RRC signaling includes the beam indication configuration information.

In some possible implementations, the RRC signaling includes a first information field, the first information field is used to indicate one of the following: whether a semi-persistent time feature is enabled; or the resource type including one of the following: semi-persistent, periodic, or aperiodic.

For the implementation of this embodiment reference may be made to the description of the corresponding embodiments of FIG. 2 to FIG. 5 above, and details of all of them are not repeated here.

In embodiments of the disclosure, the network device 102 sends the beam indication configuration information to the network-controlled repeater 101 to issue a semi-persistent beam configuration, thereby facilitating the network-controlled repeater 101 to apply the beam in combination with the semi-persistent beam configuration to perform the relay function.

Embodiments of the present disclosure provide a method for sending configuration information in an embodiment, and the method is performed by a network device 102. Referring to FIG. 7, FIG. 7 is a method for sending configuration information according to an embodiment. As shown in FIG. 7, the method includes steps S701 to S702.

Step S701, the network device 102 sends beam indication configuration information to a network-controlled repeater 101, the beam indication configuration information is used to determine whether a resource type is semi-persistent.

For the implementation of step S701 reference may be made to the description of step 601 in the aforementioned embodiment, and details will not be repeated here.

Step S702, the network device 102 sends a first signaling to the network-controlled repeater 101, the first signaling is used to activate the beam indication configuration information, or the first signaling is used to deactivate the beam indication configuration information.

In some possible implementations, the first signaling includes at least one of the following: Downlink control information DCI; or a Media-Access-Control Controller MAC CE.

In some possible implementations, the first signaling includes at least one of the following: a second information field for indicating a beam configuration ID; or a third information field for indicating an activation instruction or a deactivation instruction.

In some possible implementations, in a case where the first signaling is DCI, the second information field is one of the following: a dedicated information field added in the DCI; or reuse of an original information field in DCI.

In some possible implementations, in a case where the first signaling is DCI, the third information field is one of the following: a dedicated information field added in DCI; or reuse of an original information field in DCI.

In some possible implementations, in a case where the beam indication configuration information does not include a time resource, the first signaling further includes a fourth information field for indicating a time resource ID.

In some possible implementations, the fourth information field is one of the following: a dedicated information field added in DCI; or reuse of an original information field in DCI.

It can be understood that for the implementation of this embodiment reference may be made to the description of the corresponding embodiments of FIG. 2 to FIG. 5 above, and details will not be repeated here.

In embodiments of the disclosure, the first signaling sent by the network device 102 can be used to activate or deactivate the beam indication configuration information. In the activation scenario, the NCR101 can apply the corresponding semi-persistent beam, and in the deactivation scenario, the NCR101 may stop applying the semi-persistent beam. In addition, the NCR101 can obtain parameters related to beam indication in different scenarios based on the beam indication configuration information of the network device 102 and the different indications of the first signaling.

Embodiments of the present disclosure provide a method for sending configuration information, which is performed by a network device 102. The method includes steps S701 to S703.

Step S701, the network device 102 sends beam indication configuration information to a network-controlled repeater 101, the beam indication configuration information is used to determine whether a resource type is semi-persistent.

For the implementation of step S701 reference may be made to the description of step 601 in the aforementioned embodiment, and details will not be repeated here.

Step S702, the network device 102 sends a first signaling to the network-controlled repeater 101, the first signaling is used to activate the beam indication configuration information, or the first signaling is used to deactivate the beam indication configuration information.

For the implementation of step S702 reference may be made to the aforementioned embodiment and details will not be described here again.

Step S703, the network device 102 determines whether the beam indication configuration information is activated according to feedback information of the NCR 101 based on the first signaling.

In some possible implementations, when the first signaling is an activation signaling, the NCR101 can send uplink control information (UCI) after the semi-persistent beam is activated. The UCI includes, for example, an HARQ-ACK, channel state information (CSI), etc. The network device 102 can know, based on the received UCI, that the semi-persistent beam is activated.

In some possible implementations, when the first signaling is a deactivation signaling, after the semi-persistent beam is deactivated, the NCR101 needs to perform HARQ-ACK feedback, so that the network device 102 knows, based on the HARQ-ACK feedback, that the semi-persistent beam is deactivated.

To facilitate understanding of embodiments of the present disclosure, some specific examples are listed below.

In a first aspect, a semi-persistent beam indication is determined according to an RRC configuration.

In a first example, the RRC configuration at least includes one or more beam IDs and periodicities, and does not include a time resource (time resource information). The time resource includes at least one of the following: {slot offset, symbol offset, symbol duration}. When the above conditions are met, it is determined to be a semi-persistent beam indication.

In this example, the time resource may be indicated in an activation signaling or a deactivation signaling.

In a second example, the RRC configuration at least includes one or more beam IDs, periodicities, and time resources.

In this example, an information field is added to indicate whether to enable or disable a semi-persistent feature. For example, if enabled, it indicates that the time feature of the beam configuration is semi-persistent; if not enabled or disabled, it indicates that the time feature of the beam configuration is periodic. In a default case, that is, when the information field indicating enabling or disabling does not appear, the beam configuration is default to be periodic.

Or, in the second example, an information field indicating a resource type is added to indicate that the resource type is periodic or semi-persistent.

An example of the RRC configuration can be referred to as follows:

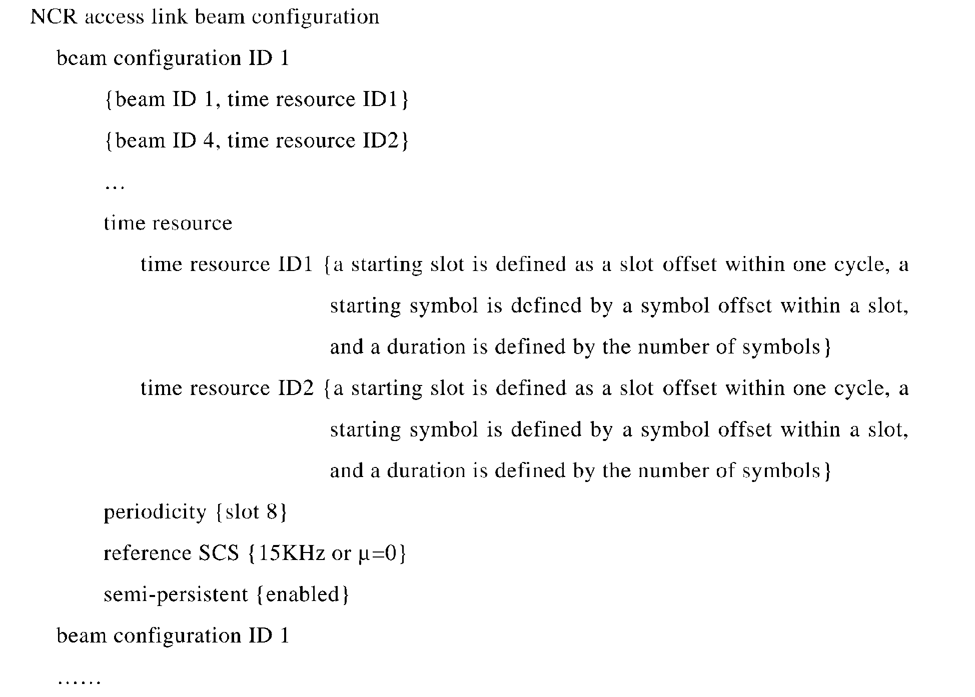

In a second aspect, the activation or deactivation method of the semi-persistent beam indication: activation or deactivation through the first signaling.

In a first example, the activation/deactivation command is a DCI.

Scenario 1: an RRC configuration includes time resource information, the DCI only indicates a beam configuration ID, and all or part of the Tₘₐₓ and/or Lₘₐₓ fields are set to special values to indicate activation or deactivation.

In scenario 1-1, a new field is introduced in DCI to indicate the beam configuration ID, and an existing field is reused to indicate activation or deactivation information. For example, all or part of the Tₘₐₓ and/or Lₘₐₓ fields are set to special values to indicate activation or deactivation.

In scenario 1-2, a new field is introduced in the DCI to indicate activation or deactivation information, and an existing field is reused. For example, at least one field in the Lₘₐₓ beam ID indication fields is reused to indicate the beam configuration ID. For example, if the new field is 00, it means that the DCI is not used to indicate the activation/deactivation of the semi-persistent beam, 01 means that the DCI is used for semi-persistent activation, and 10 means that the DCI is used for deactivation. When indicating activation/deactivation, at least one field in the Lₘₐₓ beam ID indication fields is reused to indicate the beam configuration ID.

In scenarios 1-3, two new fields are introduced in DCI, indicating the beam configuration ID and activation or deactivation information respectively.

Scenario 2: the RRC configuration does not contain time resource information, and the DCI needs to indicate a beam configuration ID and a time resource ID.

In scenario 2-1, some or all of the Tₘₐₓ time resource indication fields in the DCI are reused to indicate the time resource ID, and all Lₘₐₓ fields are set to special values to indicate activation or deactivation.

In scenario 2-2, the time resource indication field in the DCI is not reused, and a dedicated field is used to indicate the time resource ID. All Lₘₐₓ fields are set to special values to indicate activation or deactivation.

In scenario 2-3, a dedicated field is used in the DCI to indicate time information such as time resource ID, and activation/deactivation information.

Scenario 3: The RRC configuration does not contain the time resource information. The DCI needs to indicate a beam configuration ID, a time resource ID, and activation/deactivation information.

In scenario 3-1, a new field is introduced in the DCI to indicate the beam configuration ID, and the time resource indication field in the DCI is reused to indicate the time resource ID. All beam ID indication fields are set to special values to indicate activation or deactivation.

In scenario 3-2, a new field is introduced into the DCI to indicate the time resource ID, the L field in the DCI is reused to indicate the beam configuration ID, and all T fields are set to special values to indicate activation or deactivation.

In scenario 3-3, a new field is introduced into the DCI to indicate activation or deactivation information, and an existing beam ID indication field is reused to indicate the beam configuration ID, and the time resource indication field is reused to indicate the time resource ID. If the field is 00, it means that the DCI is not used to indicate the activation/deactivation of the semi-persistent beam; 01 means that the DCI is used for semi-persistent activation; and 10 means that the DCI is used for deactivation. When indicating activation, the time resource indication field and the beam ID indication field are reused to indicate the time resource and beam config index; when indicating deactivation, at least the beam ID indication field is reused to indicate the beam configuration ID.

In scenario 3-4, three new fields are introduced in DCI, indicating the time resource ID, the beam configuration ID and activation/deactivation information respectively.

In the second example, the activation/deactivation command is a MAC CE.

The MAC CE carries at least an RRC beam configuration ID and activation/deactivation information. The beam configuration ID includes a semi-persistent beam ID to be activated and its time resource, and a time feature of an activated RRC beam configuration ID is semi-persistent, which can refer to the description of the first aspect.

Scenario 1: the RRC configuration includes time resource information, and the MAC CE indicates the beam configuration ID and the activation/deactivation information.

Scenario 2: the RRC configuration does not contain the time resource information, and the MAC CE indicates the beam configuration ID, the time resource ID, and the activation/deactivation information.

For example, the MAC CE includes at least the following two information fields: A/D field for indicating activation or deactivation; and
An SP beam configuration ID for indicating a semi-persistent beam configuration ID or index configured by RRC.

Preferably, the MAC CE may also include link information to indicate whether it is an access link or other links.

It can be understood that the second aspect does not exclude a special case where activation and deactivation use different first signaling, such as activation using a DCI signaling and deactivation using the MAC CE.

The third aspect is an activation and deactivation timing of the activation/deactivation commands of the semi-persistent beam.

In a first example, when the HARQ feedback is not required for the first signaling, the NCR uses a time unit where the first signaling is received as the reference time unit, and calculates a starting application position/terminating application position of the semi-persistent beam according to an offset and the reference SCS in the RRC configuration. The time unit can be a slot or a symbol. For example, the starting application position is a starting application slot or a starting application symbol, and the terminating application position is a terminating application slot or a terminating application symbol.

For example, the NCR101 receives the first signaling indicating activation in slot n, the defined offset value = 0, the slot offset value (slot offset) in the time resource = slo, the symbol offset value (symbol offset) = syo, the symbol duration (symbol duration) = syd, and the periodicity is set to p.

The starting application position includes the starting application slot and the starting application symbol. In this example, the starting application slot x of the semi-persistent beam is: slot x = slot n + slo, the starting application symbol is the (syo +1)^{th} symbol in slot x, if syo = 0, it is the first symbol in slot x, or symbol #0.

For another example, the NCR101 receives the first signaling indicating deactivation in slot m, the defined offset value = 0, the slot offset value in the time resource = slo, the symbol offset value = syo, the symbol duration = syd, and the periodicity is set to be p.

The termination application position includes a termination application slot. In this example, the application slot of the semi-persistent beam is slot y = slot n + slo + n*N, where n is a natural number 0, 1, 2, ..., then the termination application slot of the semi-persistent beam is the last application slot before slot m.

In the second example, when the HARQ-ACK feedback is required for the first signaling, the NCR uses the time unit where the feedback HARQ-ACK is located as the reference time unit, and calculates the starting application position/terminating application position of the semi-persistent beam according to the offset and the reference SCS in the RRC configuration. The time unit can be a slot or a symbol. For example, the starting application position is a starting application slot or a starting application symbol, and the terminating application position is a terminating application slot or a terminating application symbol.

For example, if the NCR feeds back an HARQ-ACK feedback for deactivating DCI in slot m, the semi-persistent beam becomes invalid in slot m+X, where X is a defined offset value and X can be equal to 0, where X is a slot value or symbol value predefined by the network or protocol. The termination application slot of the semi-persistent beam is the last application slot before the deactivation signaling takes effect.

It is understandable that in some cases, activation does not require the HARQ feedback, while deactivation requires the HARQ feedback. The reason is that when a beam is activated, a base station can determine whether the beam is activated through a UCI (such as an HARQ-ACK, a CSI, etc.) fed back by the UE. When deactivating, the base station cannot determine, through the feedback of the UE, whether the NCR has deactivated the beam.

Based on the same concept as the above method embodiments, embodiments of the present disclosure also provide a device for receiving configuration information, which can have the functions of the NCR101 in the above method embodiments and can be used to execute the steps performed by the NCR101 provided in the above method embodiments. The functions can be implemented by hardware, or by software, or hardware executing corresponding software. The hardware or software includes one or more modules corresponding to the above functions.

In a possible implementation, the device 800 shown in FIG.8 can be used as the NCR 101 involved in the above method embodiments and execute the steps performed by the NCR 101 in the above method embodiments. As shown in FIG. 8, the device 800 may include a transceiver module 801, and the transceiver module 801 may be used to support a communication device to communicate.

When executing the steps implemented by the NCR101, the transceiver module 801 is configured to receive beam indication configuration information sent by a network device, and the beam indication configuration information is used to determine whether a resource type is semi-persistent.

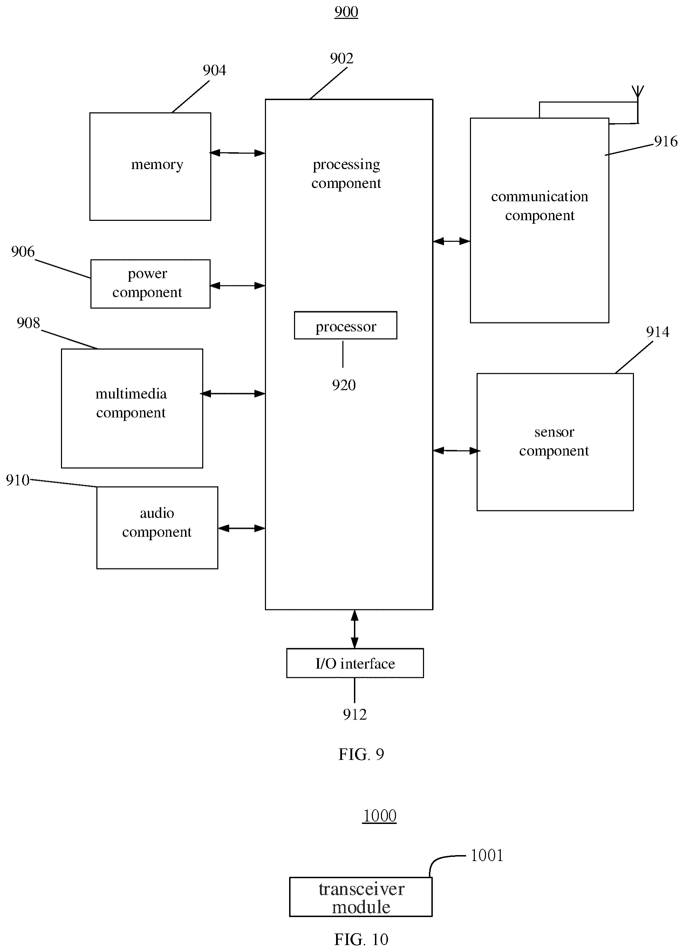

When the device for receiving configuration information is the NCR101, its structure may also be as shown in FIG. 9. The device 900 may be a mobile phone, a computer, a digital broadcast terminal, a message transceiver, a game console, a tablet device, a medical device, a fitness device, a personal digital assistant, etc.

As shown in FIG. 9, the device 900 may include one or more of the following components: a processing component 902, a memory 904, a power component 906, a multimedia component 908, an audio component 910, an input/output (I/O) interface 912, a sensor component 914, and a communication component 916.

The processing component 902 generally controls the overall operation of the device 900, such as operations associated with display, phone calls, data communications, camera operations, and recording operations. The processing component 902 may include one or more processors 920 to execute instructions to complete all or part of the steps of the above-mentioned method. In addition, the processing component 902 may include one or more modules to facilitate the interaction between the processing component 902 and other components. For example, the processing component 902 may include a multimedia module to facilitate the interaction between the multimedia component 908 and the processing component 902.

The memory 904 is configured to store various types of data to support operations on the device 900. Examples of such data include instructions for any application or method operating on the device 900, contact data, phone book data, messages, pictures, videos, etc. The memory 904 can be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power component 906 provides power to the various components of the device 900. The power component 906 may include a power management system, one or more power supplies, and other components associated with generating, managing, and distributing power for the device 900.

The multimedia component 908 includes a screen that provides an output interface between the device 900 and the user. In some embodiments, the screen may include a liquid crystal display (LCD) and a touch panel (TP). If the screen includes a touch panel, the screen may be implemented as a touch screen to receive input signals from the user. The touch panel includes one or more touch sensors to sense touch, slide, and gestures on the touch panel. The touch sensor may not only sense a boundary of the touch or slide action, but also detect a duration and pressure associated with the touch or slide operation. In some embodiments, the multimedia component 908 includes a front camera and/or a rear camera. When the device 900 is in an operating mode, such as a shooting mode or a video mode, the front camera and/or the rear camera may receive external multimedia data. Each front camera and rear camera may be a fixed optical lens system or have a focal length and optical zoom capability.

The audio component 910 is configured to output and/or input audio signals. For example, the audio component 910 includes a microphone (MIC). When the device 900 is in an operating mode, such as a call mode, a recording mode, and a speech recognition mode, the microphone is configured to receive an external audio signal. The received audio signal can be further stored in the memory 904 or sent via the communication component 916. In some embodiments, the audio component 910 also includes a speaker for outputting audio signals.

The I/O interface 912 provides an interface between the processing component 902 and peripheral interface modules, such as keyboards, click wheels, buttons, etc. These buttons may include but are not limited to: a home button, a volume button, a start button, and a lock button.

The sensor component 914 includes one or more sensors for providing various aspects of status assessment for the device 900. For example, the sensor component 914 can detect an open/closed state of the device 900, a relative positioning between components, such as the display and keypad of the device 900, and the sensor component 914 can also detect a position change of the device 900 or a component of the device 900, the presence or absence of a user contact with the device 900, an orientation or acceleration/deceleration of the device 900, and a temperature change of the device 900. The sensor component 914 may include a proximity sensor configured to detect the presence of nearby objects without any physical contact. The sensor component 914 may also include an optical sensor, such as a CMOS or CCD image sensor, for use in imaging applications. In some embodiments, the sensor component 914 may also include an accelerometer, a gyroscope sensor, a magnetic sensor, a pressure sensor, or a temperature sensor.

The communication component 916 is configured to facilitate wired or wireless communication between the device 900 and other devices. The device 900 can access a wireless network based on a communication standard, such as Wi-Fi, 2G or 3G, or a combination thereof. In an embodiment, the communication component 916 receives a broadcast signal from an external broadcast management system or broadcast-related information via a broadcast channel. In an embodiment, the communication component 916 also includes a near field communication (NFC) module to facilitate short-range communication. For example, the NFC module can be implemented based on radio frequency identification (RFID) technology, infrared data association (IrDA) technology, ultra-wideband (UWB) technology, Bluetooth (BT) technology and other technologies.

In an embodiment, the device 900 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors or other electronic components to perform the above method.

In an embodiment, a non-transitory computer-readable storage medium including instructions is also provided, such as the memory 904 including instructions, and the instructions can be executed by the processor 920 of the device 900 to perform the above method. For example, the non-transitory computer-readable storage medium can be a ROM, a random access memory (RAM), a CD-ROM, a magnetic tape, a floppy disk, an optical data storage device, etc.

Based on the same concept as the above method embodiments, embodiments of the present disclosure also provide a device for sending configuration information, which can have the functions of the network device 102 in the above method embodiments, and can be used to execute the steps performed by the network device 102 provided by the above method embodiments. The functions can be implemented by hardware, or by software or hardware executing corresponding software. The hardware or software includes one or more modules corresponding to the above functions.

In a possible implementation, the device 1000 shown in FIG.10 may be used as the network device 102 involved in the above method embodiments, and execute the steps performed by the network device 102 in the above method embodiments. As shown in FIG. 10, the device 1000 may include mutually coupled transceiver modules 1001, and the transceiver modules 1001 may be used to support the communication device to communicate.

When executing the steps implemented by the network device 102, the transceiver module 1001 is configured to send beam indication configuration information to a network-controlled repeater, the beam indication configuration information is used to determine whether a resource type is semi-persistent.

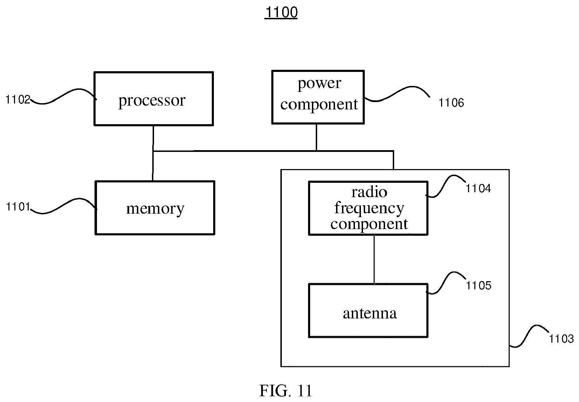

When the communication device is the network device 102, its structure can also be shown in FIG. 11. The structure of the communication device is illustrated by taking the base station as an example. As shown in FIG. 11, the device 1100 includes a memory 1101, a processor 1102, a transceiver component 1103, and a power supply component 1106. The memory 1101 is coupled to the processor 1102, and can be used to store a program and data necessary for the communication device 1100 to implement various functions. The processor 1102 is configured to support the communication device 1100 to perform the corresponding functions in the above method, and the functions can be implemented by calling the program stored in the memory 1101. The transceiver component 1103 can be a wireless transceiver, which can be used to support the communication device 1100 to receive signaling and/or data through a radio air interface, and send signaling and/or data. The transceiver component 1103 may also be referred to as a transceiver unit or a communication unit. The transceiver component 1103 may include a radio frequency component 1104 and one or more antennas 1105. The radio frequency component 1104 may be a remote radio unit (RRU), which may be used for transmitting radio frequency signals and converting the radio frequency signals into baseband signals, and the one or more antennas 1105 may be used for radiating and receiving radio frequency signals.

When the communication device 1100 needs to send data, the processor 1102 can perform baseband processing on the data to be sent and output a baseband signal to a radio frequency (RF) unit. The RF unit performs RF processing on the baseband signal and then sends a RF signal in the form of electromagnetic waves through the antenna. When data is sent to the communication device 1100, the RF unit receives the RF signal through the antenna, converts the RF signal into a baseband signal, and outputs the baseband signal to the processor 1102. The processor 1102 converts the baseband signal into data and processes the data.

Those skilled in the art may readily appreciate other implementations of the embodiments of the disclosure after considering the specification and practicing the disclosure disclosed herein. The present disclosure is intended to cover any variations, uses, or adaptations of the embodiments of the disclosure, which follow the general principles of the embodiments of the disclosure and include common knowledge or customary technical means in the art that are not disclosed in the present disclosure. The specification and examples are to be considered merely as illustrative, and the true scope and spirit of the embodiments of the disclosure are indicated by the following claims.

It should be understood that the embodiments of the present disclosure are not limited to the precise structures described above and shown in the drawings, and various modifications and changes may be made without departing from the scope thereof. The scope of the embodiments of the present disclosure is limited only by the appended claims.

### Industrial Applicability

In the method of the disclosure herein, a network-controlled repeater receives beam indication configuration information sent by a network device to obtain a possible semi-persistent beam configuration, thereby facilitating the network-controlled repeater to apply a beam in combination with the semi-persistent beam configuration to perform a relay function.

## Claims

1. A method for receiving configuration information, performed by a network-controlled repeater, comprising:
receiving beam indication configuration information sent by a network device, wherein the beam indication configuration information is configured to determine whether a resource type is semi-persistent.

2. The method according to claim 1, wherein receiving the beam indication configuration information sent by the network device comprises:
receiving a radio resource control (RRC) signaling sent by the network device, wherein the RRC signaling comprises the beam indication configuration information.

3. The method according to claim 2, wherein the RRC signaling comprises a first information field, and the first information field indicates the resource type.

4. The method according to claim 3, wherein the first information field indicates whether a semi-persistent time feature is enabled.

5. The method according to claim 3, wherein the first information field indicates that the resource type comprises one of: semi-persistent, periodic, or aperiodic.

6. The method according to any one of claims 1 to 5, wherein the beam indication configuration information comprises at least one of:
a beam configuration identification (ID);
a beam ID;
a time resource;
a periodicity; or
a reference subcarrier spacing (SCS).

7. The method according to any one of claims 1 to 6, further comprising:
receiving a first signaling sent by the network device, wherein the first signaling is configured to activate the beam indication configuration information, or the first signaling is configured to deactivate the beam indication configuration information.

8. The method according to claim 7, wherein the first signaling comprises at least one of:
downlink control information (DCI); or
a media-access-control control element (MAC CE).

9. The method according to claim 7 or 8, wherein the first signaling indicates at least one of:
a beam configuration ID; or
an activation instruction or a deactivation instruction.

10. The method according to claim 9, wherein the first signaling comprises at least one of:
a second information field for indicating the beam configuration ID; or
a third information field for indicating the activation instruction or the deactivation instruction.

11. The method according to claim 10, wherein, in a case where the first signaling is DCI, the second information field is reuse of an original information field in the DCI.

12. The method according to claim 10, wherein, in a case where the first signaling is DCI, the third information field is a dedicated information field added in the DCI.

13. The method according to claim 10, wherein,
in a case where the beam indication configuration information does not comprise a time resource, the first signaling further comprises a fourth information field for indicating a time resource ID.

14. The method according to claim 13, wherein, in a case where the first signaling is DCI, the fourth information field is reuse of an original information field in the DCI.

15. The method according to any one of claims 11, 12 or 14, wherein the original information field in the DCI comprises at least one of a time resource indication field or a beam ID indication field.

16. The method according to claim 7, further comprising:
determining a time location where the first signaling takes effect based on a time location where the first signaling is located; and
determining an application position of a semi-persistent beam corresponding to the beam indication configuration information based on the time position where the first signaling takes effect, and a time resource, a periodicity and a reference SCS in the beam indication configuration information.

17. The method according to claim 7, further comprising:
determining a time position where the first signaling takes effect based on a time position where feedback information corresponding to the first signaling is located; and
determining an application position of a semi-persistent beam corresponding to the beam indication configuration information based on the time position where the first signaling takes effect, a time resource, a periodicity and a reference SCS in the beam indication configuration information.

18. A method for sending configuration information, performed by a network device, comprising:
sending beam indication configuration information to a network-controlled repeater, wherein the beam indication configuration information is configured to determine whether a resource type is semi-persistent.

19. The method according to claim 18, wherein sending the beam indication configuration information to the network-controlled repeater comprises:
sending a radio resource control (RRC) signaling to the network-controlled repeater, wherein the RRC signaling comprises the beam indication configuration information.

20. The method according to claim 19, wherein the RRC signaling comprises a first information field, and the first information field indicates one of:
whether a semi-persistent time feature is enabled; or
the resource type comprising one of: semi-persistent, periodic, or aperiodic.

21. The method according to any one of claims 18 to 20, further comprising:
sending a first signaling to the network-controlled repeater, wherein the first signaling is configured to activate the beam indication configuration information, or the first signaling is configured to deactivate the beam indication configuration information.

22. The method according to claim 21, wherein the first signaling comprises at least one of:
downlink control information (DCI); or
a media-access-control control element (MAC CE).

23. The method according to claim 21 or 22, wherein the first signaling comprises at least one of:
a second information field for indicating a beam configuration identification (ID); or
a third information field for indicating an activation instruction or a deactivation instruction.

24. The method according to claim 23, wherein, in a case where the first signaling is DCI, the second information field is reuse of an original information field in the DCI.

25. The method according to claim 23, wherein, in a case where the first signaling is DCI, the third information field is a dedicated information field added in the DCI.

26. The method according to claim 23, wherein,
in a case where the beam indication configuration information does not comprise a time resource, the first signaling further comprises a fourth information field for indicating a time resource ID.

27. The method according to claim 26, wherein the fourth information field is reuse of an original information field in the DCI.

28. The method according to claim 20, further comprising:
determining whether the beam indication configuration information is activated based on feedback information sent by the network-controlled repeater based on the first signaling.

29. A device for receiving configuration information, configured in a network-controlled repeater, comprising:
a transceiver module, configured to receive beam indication configuration information sent by a network device, wherein the beam indication configuration information is configured to determine whether a resource type is semi-persistent.

30. A device for sending configuration information, configured in a network device, comprising:
a transceiver module, configured to send beam indication configuration information to a network-controlled repeater, wherein the beam indication configuration information is configured to determine whether a resource type is semi-persistent.

31. A network-controlled repeater, comprising a processor and a memory; wherein the memory is configured to store a computer program; and the processor is configured to execute the computer program to perform the method according to any one of claims 1 to 17.

32. A network device, comprising a processor and a memory; wherein the memory is configured to store a computer program; and the processor is configured to execute the computer program to perform the method according to any one of claims 18 to 28.

33. A computer-readable storage medium having instructions, a computer program, or a program stored thereon that, when called and executed by a computer, cause the computer to perform the method according to any one of claims 1 to 17.

34. A computer-readable storage medium having instructions, a computer program, or a program stored thereon that, when called and executed by a computer, cause the computer to perform the method according to any one of claims 18 to 28.
